# EUROPÄISCHE PATENTSCHRIFT

(11) **EP 3 992 583 B1**
(45) Veröffentlichungstag und Bekanntmachung des Hinweises auf die Patenterteilung: **04.01.2023**
(21) Anmeldenummer: 20205522.4
(22) Anmeldetag: 03.11.2020
(51) Int. Cl.: G01D 5/48, G01D 3/08

(54) **MAGNETOSTRIKTIVER WEGSENSOR**
MAGNETOSTRICTIVE DISPLACEMENT SENSOR
CAPTEUR DE DÉPLACEMENT MAGNÉTOSTRICTIF

(43) Veröffentlichungstag der Anmeldung: 04.05.2022
(73) Patentinhaber: SICK ATech GmbH, 58453 Witten (DE)
(72) Erfinder: Ahmad, Saiful Islam, 58453 Witten (DE)
(74) Vertreter: Ludewigt, Christoph

(56) Entgegenhaltungen:
- DE-A1- 3 131 455
- DE-A1-102018 117 285
- DE-B3-102017 111 342

## Beschreibung

Die vorliegende Erfindung betrifft eine Steuer- und Auswerteeinheit für einen magnetostriktiven Wegsensor sowie einen magnetostriktiven Wegsensor mit einer magnetostriktiven Gerätekomponente, die sich entlang einer Messstrecke erstreckt und zum Leiten von durch Magnetostriktion ausgelösten Körperschallwellen ausgebildet ist.

Solche Sensoren sind beispielsweise in der DE 31 31 455 A1 offenbart und werden insbesondere in der industriellen Messtechnik dazu eingesetzt, Positionen, Längen oder zurückgelegte Wege zu messen. Bei der magnetostriktiven Gerätekomponente kann es sich um einen dünnen Stab, einen Draht oder ein Rohr aus einem ferromagnetischen Material wie zum Beispiel Eisen, Nickel oder Kobalt handeln, der/das zum Beispiel wenige Zentimeter bis mehrere Meter lang sein kann. An dem Bauteil, dessen Position erfasst werden soll, ist üblicherweise ein sogenannter "Positionsmagnet", beispielsweise in Form eines Dauermagneten, angebracht, der in der magnetostriktiven Gerätekomponente ein Magnetfeld erzeugt. Der Positionsmagnet kann beispielsweise ringförmig sein und die magnetostriktiven Gerätekomponente umschließen. Wenn ein elektrischer Stromimpuls durch die magnetostriktive Gerätekomponente geschickt wird, wird in der Umgebung der magnetostriktiven Gerätekomponenten zusätzlich zu dem durch den Positionsmagneten erzeugten Magnetfeld ein weiteres, zeitlich und örtlich veränderliches Magnetfeld erzeugt. Durch Wechselwirkung der beiden Magnetfelder am Ort des Positionsmagneten kann ein mechanischer Impuls wie zum Beispiel ein mechanischer Longitudinal- und/oder Torsionsimpuls in der magnetostriktiven Gerätekomponente erzeugt werden, der sich in Form einer Körperschallwelle entlang der Messstrecke bewegt. Ein Messwandler des Wegsensors dient üblicherweise dazu, die von der magnetostriktiven Gerätekomponente geleiteten, mechanischen Körperschallwellen in elektrische Messsignale zu wandeln. Der Messwandler kann beispielsweise eine Spule oder ein piezoelektrisches Messelement umfassen. Der Messwandler kann zum Beispiel gestaltet sein wie in der EP 0 882 212 B1 beschrieben. Durch eine Laufzeitmessung zwischen Stromimpuls und Erfassung der Körperschallwelle kann letztlich die Position des Positionsmagneten ermittelt werden. Auf dem magnetostriktiven Messprinzip beruhende Wegsensoren arbeiten berührungslos und liefern Absolutwerte. Sie erfordern unter Berücksichtigung von thermischen Koeffizienten und mechanischen Toleranzen in der Regel keine Nachkalibrierung und eignen sich auch für widrige Einsatzbedingungen. Häufig sind sie als Linearwegsensoren ausgestaltet. Eine Anwendung derartiger Sensoren innerhalb von Hydraulikzylindern, um deren Kolbenstellung zu detektieren, ist zum Beispiel in DE 20 2006 012 815 U1 beschrieben.

Die beschriebenen Longitudinal- oder Torsionspulse bewegen sich in der magnetostriktiven Gerätekomponente in beiden Richtungen von der Position des Positionsmagneten weg. An dem einen Ende der magnetostriktiven Gerätekomponente werden sie mit Hilfe des Messwandlers detektiert, um mit der beschriebenen Laufzeitmessung die aktuelle Position des Positionsmagneten entlang der magnetostriktiven Gerätekomponente zu bestimmen. Am anderen Ende wird regelmäßig eine Dämpfereinheit verwendet, um zu verhindern, dass der Puls reflektiert wird und entlang der magnetostriktiven Gerätekomponente zurückpropagiert, da dies die Detektion des direkt in Richtung des Messwandlers laufenden Pulses stören oder uneindeutig machen kann.

Aus der eingangs genannten DE 31 31 455 A1 ist bekannt, temperaturabhängige Änderungen der Körperschallausbreitung und Längenänderungen der magnetostriktiven Gerätekomponente sowie Änderungen von elektrischen Parametern der Auswerteschaltung in ihrem Einfluss auf die Positionsbestimmung des Positionsmagneten zu kompensieren. Dabei wird ein Referenzsignal, das beispielsweise von einem weiteren, ortsfesten Positionsmagneten oder einem ungedämpften Ende der magnetostriktiven Gerätekomponente stammt, verwendet.

Nachteilig am genannten Stand der Technik ist, dass die Signalauswertung lediglich zur Verbesserung der Positionsbestimmung und in einem einzigen Auswertungszweig einer Auswerteschaltung erfolgt. Eine redundante Überprüfung der Positionssignale innerhalb der Auswerteschaltung, wie sie beispielsweise in sicherheitskritischen Anwendungen nötig ist, ist daher nicht möglich.

Es ist daher Aufgabe der Erfindung, eine Auswerteeinheit für einen magnetostriktiven Wegsensor anzugeben, die eine ständige Diagnose der Sensorfunktion und der Qualität der Messungen ermöglicht. Es ist weiterhin Aufgabe der Erfindung, einen verbesserten magnetostriktiven Wegsensor mit zumindest teilweise redundanter Überwachung mindestens eines Positionssignals anzugeben.

Eine erfindungsgemäße Auswerteeinheit zur Bestimmung einer Position wenigstens eines Positionsgebers weist einen Eingang zum Empfangen eines vom magnetostriktiven Wegsensor erzeugten elektrischen Messsignals auf, welches als Antwort einer magnetostriktiven Gerätekomponente des Wegsensors auf einen Stromimpuls erzeugt wurde. Das elektrische Messsignal kann beispielsweise eine oszillierende Spannung mit veränderlicher Spannungsamplitude sein und kann ein Positionssignal enthalten, welches eine Position eines relativ zu der magnetostriktiven Gerätekomponente beweglichen Positionsgebers darstellt, sowie ein eine Referenzposition darstellendes Referenzsignal. Das Referenzsignal kann dabei, wie weiter unten erläutert wird, aus verschiedenen Quellen stammen.

Die Auswerteeinheit weist weiterhin einen ersten Auswertungszweig zur Auswertung des Messsignals auf, wobei der erste Auswertungszweig dazu eingerichtet ist, eine Positionssignallaufzeit des Positionssignals und eine erste Referenzsignallaufzeit des Referenzsignals zu bestimmen. Die Bestimmung der Signallaufzeiten kann beispielsweise dadurch erfolgen, dass die Abgabe des Stromimpulses an die magnetostriktive Gerätekomponente des magnetostriktiven Wegsensors einen Zähler startet, der jeweils beim Erfassen des Positionssignals und des Referenzsignals ausgelesen wird, wobei die ausgelesenen Zählerstände jeweils eine Positionssignallaufzeit und eine erste Referenzsignallaufzeit repräsentieren.

Eine dem ersten Auswertungszweig nachgeschaltete Rechnereinheit ist dazu eingerichtet, die Positionssignallaufzeit und die erste Referenzsignallaufzeit zu empfangen und aus der ermittelten Positionssignallaufzeit eine Position des Positionsgebers zu ermitteln. Positionssignallaufzeit und/oder Referenzsignallaufzeit im Sinne dieser Anmeldung sollen dabei sowohl die Signallaufzeiten selbst als auch die sie repräsentierenden Signale umfassen, unter anderem beispielsweise die obengenannten Zählerstände.

Die Laufzeit- und/oder Positionsbestimmung in einem magnetostriktiven Wegsensor ist aus dem Stand der Technik bekannt und dem Fachmann grundsätzlich geläufig, so dass an dieser Stelle auf eine detailliertere Beschreibung der zugrundeliegenden elektronischen Signalverarbeitung, die sowohl digital als auch analog erfolgen kann, verzichtet wird.

Erfindungsgemäß weist die Auswerteeinheit einen zweiten Auswertungszweig auf, der dazu eingerichtet ist, eine zweite Referenzsignallaufzeit des Referenzsignals zu ermitteln. Die zweite Referenzsignallaufzeit kann im zweiten Auswertungszweig auf die gleiche Art bestimmt werden wie im ersten Auswertungszweig, wobei die Abgabe des Stromimpulses an die magnetostriktive Gerätekomponente des magnetostriktiven Wegsensor einen zweiten Zähler startet, der beim Erfassen des Referenzsignals ausgelesen wird, wobei der ausgelesene Zählerstand eine zweite Referenzsignallaufzeit des Referenzsignals repräsentiert. Bevorzugt wird im zweiten Auswertungszweig nur der Teil des Messsignals ausgewertet, der das Referenzsignal enthält.

Die Rechnereinheit ist dazu eingerichtet, die zweite Referenzsignallaufzeit aus dem zweiten Auswertungszweig zu empfangen und eine Abweichung zur im ersten Auswertungszweig ermittelten ersten Referenzsignallaufzeit zu bestimmen.

Die Erfindung hat den Vorteil, dass durch die Verwendung zweier Auswertungszweige in einer Auswerteeinheit eine einfache Überwachung der Signalverarbeitung und Positionsbestimmung in einem magnetostriktiven Wegsensor ermöglicht wird.

Die Rechnereinheit kann bevorzugt zur Ausgabe eines Fehlersignals aufgrund der Abweichung der ersten Referenzsignallaufzeit von der zweiten Referenzsignallaufzeit eingerichtet sein, beispielsweise wenn die Abweichung einen vorgegebenen Schwellenwert überschreitet. Es können ebenfalls mehrere, abgestufte Schwellenwerte vorgesehen sein. Überschreitet die Abweichung der Laufzeiten einen ersten Schwellenwert, kann die Rechnereinheit dazu eingerichtet sein, zunächst ein Warnsignal auszugeben, dass beispielsweise einen Hinweis auf einen Wartungsbedarf des Wegsensors enthalten kann. Bei Überschreiten eines zweiten, vorzugsweise höheren, Schwellenwerts kann ein Fehlersignal ausgegeben werden, welches in einer übergeordneten Sicherheitssteuerung beispielswiese zu einer Abschaltung oder teilweisen Abschaltung eines Systems verwendet werden kann, welches den Wegsensor umfasst. Die Rechnereinheit kann zudem dazu eingerichtet sein, ein Fehlersignal auszugeben, falls keine Laufzeitsignale von einem oder beiden Auswertungszweige empfangen werden.

Die Rechnereinheit kann weiter dazu eingerichtet sein, die Position des Positionsgebers unter Berücksichtigung der ersten und/oder der zweiten Referenzsignallaufzeit zu bestimmen. Dadurch können beispielsweise Längenänderungen oder Änderungen der Schallgeschwindigkeit in der magnetostriktiven Gerätekomponente aufgrund von Temperaturschwankungen kompensiert werden.

Wenigstens einer der Zähler zum Ermitteln der Signallaufzeiten kann beispielsweise durch ein Triggersignal eines Impulsgebers des magnetostriktiven Wegsensors gestartet werden, wobei der Impulsgeber zur Abgabe wenigstens eines Stromimpulses an ein erstes Ende der magnetostriktiven Gerätekomponente eingerichtet ist. Damit wird ein eindeutiges Signal zum Start der Laufzeitmessungen bereitgestellt.

Die Auswerteeinheit kann wenigstens eine Digitalisierungseinheit zur Digitalisierung des Messsignals aufweisen, wodurch eine digitale Verarbeitung des Messsignals ermöglicht wird. Es kann eine gemeinsame Digitalisierungseinheit für mehrere Auswertungszweige vorgesehen sein, wobei die Auswerteeinheit dazu eingerichtet ist, das Messsignal nach der Digitalisierung auf die Auswertungszweige zu verteilen. In einer alternativen Ausführungsform kann jeder Auswertungszweig eine Digitalisierungseinheit aufweisen.

In einer Ausführungsform kann der zweite Auswertungszweig dazu ausgebildet sein, die zweite Referenzsignallaufzeit mit einer vorgegebenen Soll-Signallaufzeit zu vergleichen und einen Fehlercode aufgrund einer Abweichung der zweiten Referenzsignallaufzeit von der Soll-Signallaufzeit zu erzeugen. Durch die zusätzliche Signalauswertung im zweiten Auswertungszweig wird die Fehlersicherheit der Auswerteeinheit erhöht.

Der zweite Auswertungszweig kann eine eigene Schnittstelle zur analogen oder digitalen Weitergabe der zweiten Referenzsignallaufzeit und/oder des Fehlercodes an einen externen Empfänger aufweisen. Dadurch können die zweite Referenzsignallaufzeit und/oder der Fehlercode ohne Umweg über die Rechnereinheit der Auswerteeinheit an externe Empfänger wie beispielsweise eine übergeordnete Steuerung übermittelt werden.

Ein erfindungsgemäßer magnetostriktiver Wegsensor zur Bestimmung einer Position wenigstens eines Positionsgebers weist weiterhin eine magnetostriktive Gerätekomponente auf, die sich entlang einer Messstrecke erstreckt und zum Leiten von durch Magnetostriktion ausgelösten, mechanischen Impulsen ausgebildet ist. Im Bereich eines ersten Endes der magnetostriktiven Gerätekomponente ist ein Messwandler angeordnet, der die in der magnetostriktiven Gerätekomponente propagierenden mechanischen Impulse detektiert und in ein elektrisches Messsignal umwandelt. Ein Impulsgeber ist zur Abgabe wenigstens eines Stromimpulses an das erste Ende der magnetostriktiven Gerätekomponente eingerichtet, wobei der Stromimpuls ein Magnetfeld in der magnetostriktiven Gerätekomponente induziert. Wenigstens ein relativ zur magnetostriktiven Gerätekomponente beweglicher erster Positionsgeber löst als Antwort auf den Stromimpuls und das induzierte Magnetfeld einen mechanischen Impuls in der magnetostriktiven Gerätekomponente aus, der sich in Form einer Körperschallwelle in der magnetostriktiven Gerätekomponente ausbreitet.

In einer Ausführungsform der Erfindung kann das in der Auswerteeinheit detektierte Referenzsignal durch eine Reflektion des ersten mechanischen Impulses an einem zweiten Ende der magnetostriktiven Gerätekomponente erzeugt werden.

In einer weiteren Ausführungsform der Erfindung, kann das in der Auswerteeinheit detektierte Referenzsignal von einem zweiten mechanischen Impuls erzeugt werden, der von einem in einem vorgegebenen Abstand vom ersten Ende der magnetostriktiven Gerätekomponente angeordneten Referenzmagneten ausgelöst wird.

In einer alternativen Ausführungsform der Erfindung, kann das in der Auswerteeinheit detektierte Referenzsignal im Messwandler durch das vom Stromimpuls induzierte Magnetfeld erzeugt werden, welches direkt im Messwandler ein Einkopplungssignal erzeugt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine schematische Darstellung eines magnetostriktiven Wegsensors mit einer erfindungsgemäßen Auswerteeinheit für einen magnetostriktiven Wegsensor.
- Figur 2: ein beispielhaftes Messsignal und Messsignalverarbeitung einer ersten Ausführungsform eines erfindungsgemäßen magnetostriktiven Wegsensors.
- Figur 3: ein beispielhaftes Messsignal und Messsignalverarbeitung einer zweiten Ausführungsform eines erfindungsgemäßen magnetostriktiven Wegsensors.
- Figur 4: ein beispielhaftes Messsignal und Messsignalverarbeitung einer dritten Ausführungsform eines erfindungsgemäßen magnetostriktiven Wegsensors.

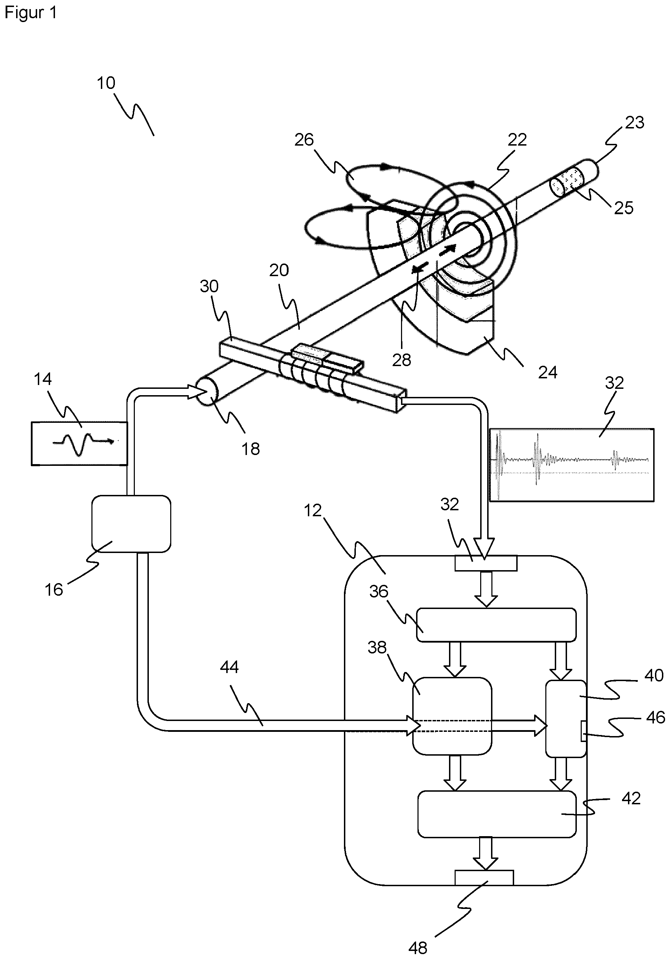

Figur 1 zeigt eine schematische Darstellung eines magnetostriktiven Wegsensors 10 mit einer erfindungsgemäßen Auswerteeinheit 12 für den magnetostriktiven Wegsensor 10. Ein Stromimpuls 14 wird von einem Impulsgeber 16 in ein erstes Ende 18 einer magnetostriktiven Gerätekomponente 20 des magnetostriktiven Wegsensors 10 eingekoppelt und erzeugt ein radiales erstes Magnetfeld 22, das entlang der magnetostriktiven Gerätekomponente 20 in Richtung des zweiten Endes 23 der magnetostriktiven Gerätekomponente 20 propagiert. Ein als Permanentmagnet ausgebildeter, relativ zur magnetostriktiven Gerätekomponente 20 beweglicher Positionsgeber 24 erzeugt ein zweites Magnetfeld 26.

Resultierend aus dem Zusammenwirken des ersten Magnetfeldes 22 und des zweiten Magnetfeldes 26 wird ein mechanischer Impuls 28 in Form einer Körperschallwelle in der magnetostriktiven Gerätekomponente 20 erzeugt.

Der mechanische Impuls 28 bewegt sich in der magnetostriktiven Gerätekomponente 20 in beiden Richtungen von der Position des Positionsgebers 24 weg. Im Bereich des ersten Endes 18 der magnetostriktiven Gerätekomponente 20 wird der mechanische Impuls 28 mit einem Messwandler 30 detektiert, der den mechanischen Impuls 28 in ein elektrisches Messsignal 32 umwandelt. Am zweiten Ende 23 der magnetostriktiven Gerätekomponente 20 ist eine Dämpfereinheit 25 angeordnet, um eine Reflektion des mechanischen Impuls 28 zurück in die magnetostriktive Gerätekomponente 20 zu verhindern oder zu reduzieren.

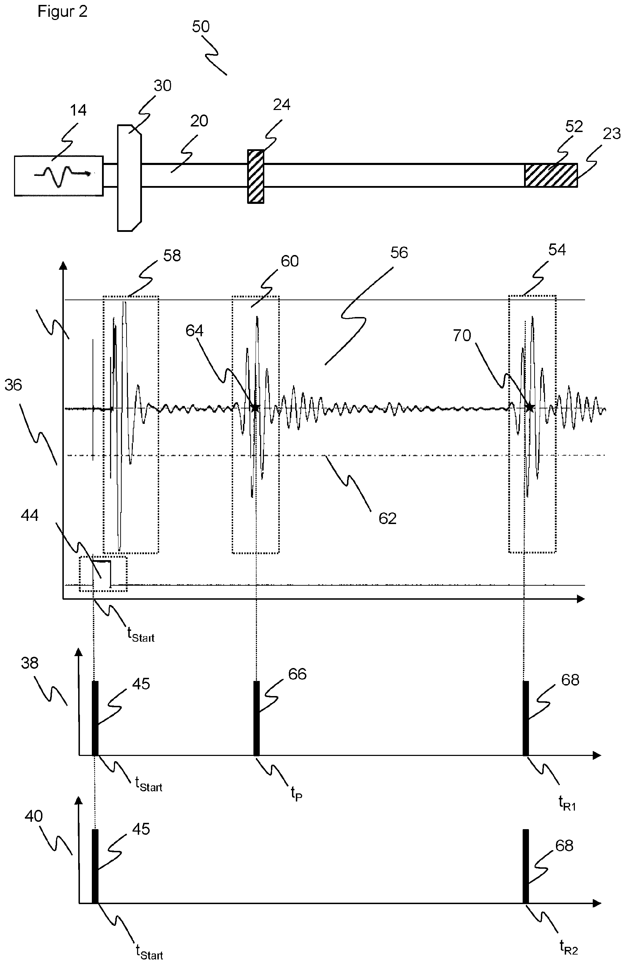

Die Auswerteeinheit 12 weist einen Eingang 34 zum Empfangen des elektrischen Messsignals 32 auf, welches wie weiter unten in den Figuren 2 bis 4 erläutert wird. wenigstens ein Positionssignal und ein Referenzsignal aufweist. Das elektrische Messsignal 32 wird von einer Digitalisierungseinheit 36 digitalisiert und in einem ersten Auswertungszweig 38 und einem zweiten Auswertungszweig 40 ausgewertet. Der erste Auswertungszweig 38 ermittelt eine Positionssignallaufzeit tp und eine erste Referenzsignallaufzeit t_{R1}, die von einer Recheneinheit 42 empfangen werden. Der zweite Auswertungszweig 40 ermittelt eine zweite Referenzsignallaufzeit t_{R2}, die ebenfalls von der Recheneinheit 42 empfangen wird. Der zweite Auswertungszweig 40 kann die zweite Referenzsignallaufzeit t_{R2} mit einer vorgegebenen Soll-Signallaufzeit vergleichen und einen Fehlercode aufgrund einer Abweichung der zweiten Referenzsignallaufzeit t_{R2} von der Soll-Signallaufzeit erzeugen. Über eine Schnittstelle 48 des zweiten Auswertungszweig 40 kann die zweite Referenzsignallaufzeit t_{R2} und oder der Fehlercode analog oder digital an einen externen Empfänger weitergegeben werden.

Zur Bestimmung der Laufzeiten können der erste Auswertungszweig 38 und der zweite Auswertungszweig 40 dazu eingerichtet sein, ein Triggersignal 44 von dem Impulsgeber 16 zu empfangen. Das Triggersignal 44 kann vom Impulsgeber 16 bei Abgabe des Stromimpulses 14 an die magnetostriktive Gerätekomponente 20 an die Auswerteeinheit 12 gesendet werden.

Die Recheneinheit 42 ist dazu ausgebildet, die Positionssignallaufzeit tp, die erste Referenzsignallaufzeit t_{R1} und die zweite Referenzsignallaufzeit t_{R2} zu empfangen, und aus der Positionssignallaufzeit tp eine Position des Positionsgebers 24 zu bestimmen. Die Recheneinheit 42 ist weiter dazu ausgebildet, eine Abweichung zwischen der ersten Referenzsignallaufzeit t_{R1} und der zweiten Referenzsignallaufzeit t_{R2} zu bestimmen.

Über eine Schnittstelle 46 der Auswerteeinheit 12 können die Ergebnisse der Recheneinheit einer Weiterverarbeitung zugeführt werden, beispielsweise einer Anzeige der Position des Positionsgebers 24, oder der Ausgabe einer Warnung, falls die Abweichung zwischen der ersten Referenzsignallaufzeit t_{R1} und der zweiten Referenzsignalzeit t_{R2} einen vorgegebenen Schwellenwert überschreitet.

Figur 2 zeigt ein beispielhaftes Messsignal 56 und eine Messsignalverarbeitung einer ersten Ausführungsform eines erfindungsgemäßen magnetostriktiven Wegsensors 50, in der ein Reflektor 52 am zweiten Ende 23 der magnetostriktiven Gerätekomponente 20 ein Referenzsignal 54 erzeugt. Das vom Messwandler 30 erzeugte Messsignal 56 umfasst dabei ein Einkopplungssignal 58, ein Positionssignal 60 und das vom Reflektor 52 erzeugte Referenzsignal 54. Ein Triggersignal 44 repräsentiert den Zeitpunkt der Abgabe des Stromimpulses 14 an die magnetostriktive Gerätekomponente 20.

Bei einer Digitalisierung des Messsignals 56 wird dem ersten Auswertezweig 38 das Triggersignal 44 als Startsignal 45 für einen ersten Zähler zum Zeitpunkt tstart übergeben. Das Einkopplungssignal 58 des Messsignals 56 wird als Störsignal ausgeblendet. Über- beziehungsweise unterschreitet das Positionssignal 60 eine vorgegebene Signalschwelle 62, wird dem ersten Auswertungszweig 38 der nächste Nulldurchgang 64 (oder das Über- bzw. Unterschreiten eines definierten Signal-Schwellenwerts) des Positionssignal 60 als digitales Positionssignal 66 übergeben und der erste Auswertungszweig 38 ermittelt aus dem Zählerstand des ersten Zählers die Signallaufzeit tp des Positionssignals. Auf die gleiche Art wird das durch den Reflektor 52 erzeugte Referenzsignal 54 ausgewertet und als digitales Referenzsignal 68 an den ersten Auswertungszweig 38 übergeben, der aus dem Zählerstand des ersten Zählers die erste Referenzsignallaufzeit t_{R1} des Referenzsignals 54 ermittelt.

Die Positionssignallaufzeit tp des Positionssignals und die erste Referenzsignallaufzeit t_{R1} werden dann an die Recheneinheit 42 (hier nicht gezeigt) übergeben

Zur Überwachung der Signalverarbeitung im ersten Auswertungszweig 38 wird dem zweiten Auswertezweig 40 das Triggersignal 44 als Startsignal 45 für einen zweiten Zähler zum Zeitpunkt t_{Start} übergeben. Das Einkopplungssignal 58 des Messsignals 56 wird als Störsignal ausgeblendet. Ebenso wird das Positionssignal 60 ausgeblendet (sog. Blanking). Das Messsignal 56 wird somit nur in einem Zeitbereich ausgewertet, in dem das Referenzsignal 54 erwartet wird. Über- beziehungsweise unterschreitet das Referenzsignal 54 die vorgegebene Signalschwelle 62, wird dem zweiten Auswertungszweig 40 der nächste Nulldurchgang 70 (oder das Über- bzw. Unterschreiten eines definierten Signal-Schwellenwerts) des Referenzsignal 54 als digitales Referenzsignal 68 übergeben und der zweite Auswertungszweig 40 ermittelt aus dem Zählerstand des zweiten Zählers die zweite Referenzsignallaufzeit t_{R2} des Referenzsignals 54.

Die zweite Referenzsignallaufzeit t_{R2} wird dann an die Recheneinheit 42 (hier nicht gezeigt) übergeben, die wie in der Beschreibung zu Figur 1 erläutert dazu eingerichtet ist, eine Abweichung zwischen der ersten Referenzsignallaufzeit t_{R1} und der zweiten Referenzsignallaufzeit t_{R2} zu bestimmen.

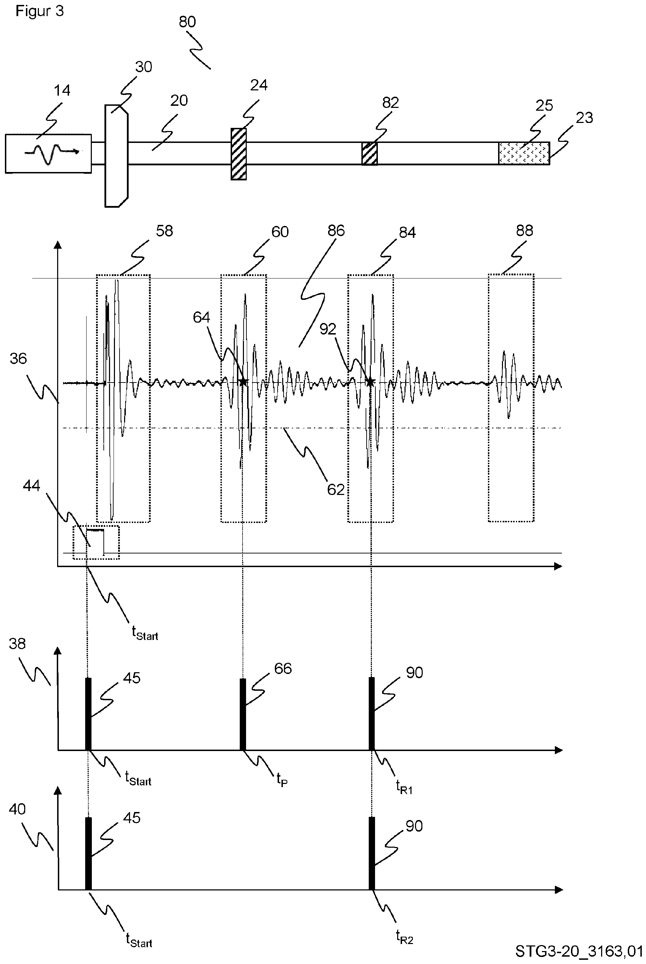

Figur 3 zeigt ein beispielhaftes Messsignal 86 und eine Messsignalverarbeitung einer zweiten Ausführungsform eines erfindungsgemäßen magnetostriktiven Wegsensors 80. Im Unterschied zu der in Figur 2 beschriebenen Ausführungsform weist der magnetostriktive Wegsensor 80 einen Referenzmagneten 82 auf, der an einer vorgegebenen Position der magnetostriktiven Gerätekomponente 20 angeordnet ist. Am zweiten Ende 23 der magnetostriktiven Gerätekomponente 20 ist wie in Figur 1 beschrieben eine Dämpfereinheit 25 angeordnet, um eine Reflexion des mechanischen Impuls 28 zurück in die magnetostriktive Gerätekomponente 20 zu verhindern oder zu reduzieren. Der Referenzmagnet 82 erzeugt ein Referenzsignal 84 auf gleiche Weise wie der Positionsgeber 24 das Positionssignal 60. Das vom Messwandler 30 erzeugte Messsignal umfasst somit ein Einkopplungssignal 58, ein Positionssignal 60, das vom Referenzmagnet 82 erzeugte Referenzsignal 84 sowie ein vom Dämpfungselement 25 erzeugtes Reflexionssignal 88. Ein Triggersignal 44 repräsentiert den Zeitpunkt der Abgabe des Stromimpulses 14 an die magnetostriktive Gerätekomponente 20.

Bei einer Digitalisierung des Messsignals 86 wird dem ersten Auswertezweig 38 das Triggersignal 44 als Startsignal 45 für einen ersten Zähler zum Zeitpunkt tstart übergeben. Das Einkopplungssignal 58 des Messsignals 86 wird als Störsignal ausgeblendet. Über- beziehungsweise unterschreitet das Positionssignal 60 eine vorgegebene Signalschwelle 62, wird dem ersten Auswertungszweig 38 der nächste Nulldurchgang 64 (oder das Über- bzw. Unterschreiten eines definierten Signal-Schwellenwerts) des Positionssignal 60 als digitales Positionssignal 66 übergeben und der erste Auswertezweig 28 ermittelt aus dem Zählerstand des ersten Zählers die Signallaufzeit tp des Positionssignals. Auf die gleiche Art wird das durch den Referenzmagneten 82 erzeugte Referenzsignal 84 ausgewertet und als digitales Referenzsignal 90 an den ersten Auswertungszweig 38 übergeben, der aus dem Zählerstand des ersten Zählers die erste Referenzsignallaufzeit t_{R1} des Referenzsignals 84 ermittelt. Das Reflexionssignal 88 des Dämpfungselement 25 über- beziehungsweise unterschreitet die vorgegebene Signalschwelle 62 nicht und wird somit nicht erfasst und ausgewertet.

Die Positionssignallaufzeit tp des Positionssignals und die erste Referenzsignallaufzeit t_{R1} werden dann an die Recheneinheit 42 (hier nicht gezeigt) übergeben

Zur Überwachung der Signalverarbeitung im ersten Auswertungszweig 38 wird dem zweiten Auswertezweig 40 das Triggersignal 44 als Startsignal 45 für einen zweiten Zähler zum Zeitpunkt t_{Start} übergeben. Das Einkopplungssignal 58 des Messsignals 56 wird als Störsignal ausgeblendet. Ebenso wird das Positionssignal 60 ausgeblendet (sog. Blanking). Das Messsignal 86 wird somit nur in einem Zeitbereich ausgewertet, in dem das Referenzsignal 84 erwartet wird. Über- beziehungsweise unterschreitet das Referenzsignal 84 die vorgegebene Signalschwelle 62, wird dem zweiten Auswertungszweig 40 der nächste Nulldurchgang 92 (oder das Über- bzw. Unterschreiten eines definierten Signal-Schwellenwerts) des Referenzsignal 84 als digitales Referenzsignal 90 übergeben und der zweite Auswertungszweig 40 ermittelt aus dem Zählerstand des zweiten Zählers die zweite Referenzsignallaufzeit t_{R2} des Referenzsignals 84.

Die zweite Referenzsignallaufzeit t_{R2} wird dann an die Recheneinheit 42 (hier nicht gezeigt) übergeben, die wie in der Beschreibung zu Figur 1 erläutert dazu eingerichtet ist, eine Abweichung zwischen der ersten Referenzsignallaufzeit t_{R1} und der zweiten Referenzsignallaufzeit t_{R2} zu bestimmen.

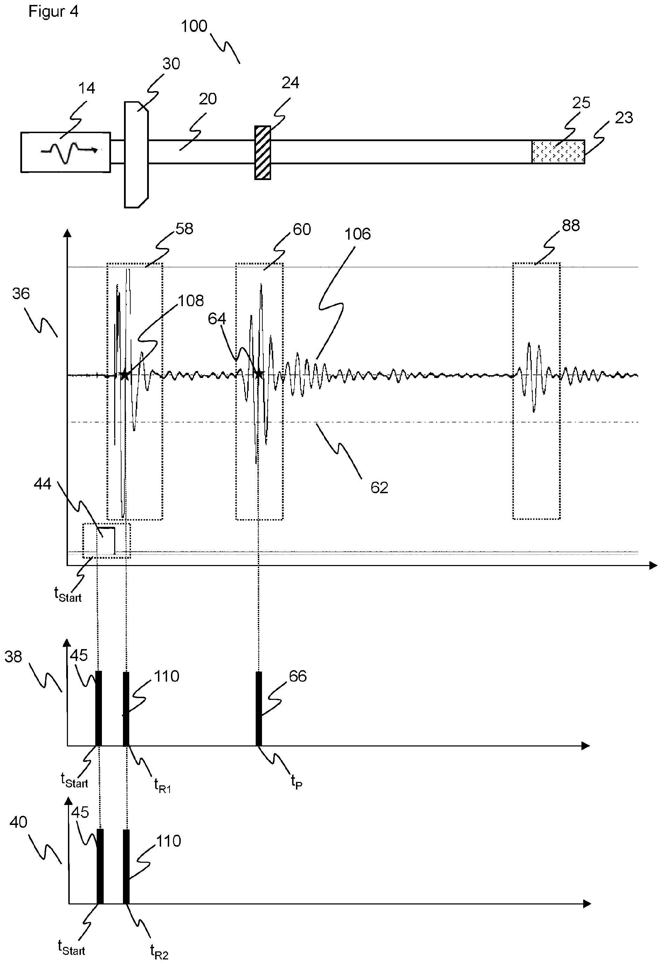

Figur 4 zeigt ein beispielhaftes Messsignal 106 und eine Messsignalverarbeitung einer dritten Ausführungsform eines erfindungsgemäßen magnetostriktiven Wegsensors 100. Im Unterschied zu den in den Figuren 2 und 3 beschriebenen Ausführungsformen verwendet der magnetostriktive Wegsensor 100 als Referenzsignal das Einkopplungssignal 58, das im Messwandler 30 durch das vom Stromimpuls 14 in der magnetostriktiven Gerätekomponenten 20 induzierte radiale Magnetfeld 22 erzeugt wird. Somit ist kein Referenzmagnet vorgesehen, und am zweiten Ende 23 der magnetostriktiven Gerätekomponente 20 ist wie in Figur 1 und 3 beschrieben eine Dämpfereinheit 25 angeordnet, um eine Reflektion des mechanischen Impuls 28 zurück in die magnetostriktive Gerätekomponente 20 zu verhindern oder zu reduzieren.

Das vom Messwandler 30 erzeugte Messsignal 106 umfasst somit ein Einkopplungssignal 58, ein Positionssignal 60 und ein vom Dämpfungselement 25 erzeugtes Reflexionssignal 88. Ein Triggersignal 44 repräsentiert den Zeitpunkt der Abgabe des Stromimpulses 14 an die magnetostriktive Gerätekomponente 20.

Bei einer Digitalisierung des Messsignals 106 wird dem ersten Auswertezweig 38 das Triggersignal 44 als Startsignal 45 für einen ersten Zähler zum Zeitpunkt t_{Start} übergeben. Über- beziehungsweise unterschreitet das Einkopplungssignal 58 des Messsignals 106 eine vorgegebene Signalschwelle 62 wird dem ersten Auswertungszweig 38 der nächste Nulldurchgang 108 (oder das Über- bzw. Unterschreiten eines definierten Signal-Schwellenwerts) des Einkopplungssignals 58 als digitales Referenzsignal 110 übergeben und der erste Auswertezweig 38 ermittelt aus dem Zählerstand des ersten Zählers die erste Referenzsignallaufzeit t_{R1}. Überbeziehungsweise unterschreitet das Positionssignal 60 eine vorgegebene Signalschwelle 62, wird dem ersten Auswertungszweig 38 der nächste Nulldurchgang 64 (oder das Über- bzw. Unterschreiten eines definierten Signal-Schwellenwerts) des Positionssignal 60 als digitales Positionssignal 66 übergeben und der erste Auswertezweig 28 ermittelt aus dem Zählerstand des ersten Zählers die Signallaufzeit tp des Positionssignals. Das Reflexionssignal 88 des Dämpfungselement 25 über- beziehungsweise unterschreitet die vorgegebene Signalschwelle 62 nicht und wird somit nicht erfasst und ausgewertet.

Die Signallaufzeit tp des Positionssignals und die erste Referenzsignallaufzeit t_{R1} werden dann an die Recheneinheit 42 (hier nicht gezeigt) übergeben.

Zur Überwachung der Signalverarbeitung im ersten Auswertungszweig 38 wird dem zweiten Auswertezweig 40 das Triggersignal 44 als Startsignal 45 für einen zweiten Zähler zum Zeitpunkt t_{Start} übergeben. Über- beziehungsweise unterschreitet das Einkopplungssignal 58 des Messsignals 106 eine vorgegebene Signalschwelle 62, wird dem zweiten Auswertungszweig 40 der nächste Nulldurchgang 108 (oder das Über- bzw. Unterschreiten eines definierten Signal-Schwellenwerts) des Einkopplungssignals 58 als digitales Referenzsignal 110 übergeben und der zweite Auswertezweig 40 ermittelt aus dem Zählerstand des zweiten Zählers die zweite Referenzsignallaufzeit t_{R2}.

Die zweite Referenzsignallaufzeit t_{R2} wird dann an die Recheneinheit 42 (hier nicht gezeigt) übergeben, die wie in der Beschreibung zu Figur 1 erläutert dazu eingerichtet ist, eine Abweichung zwischen der ersten Referenzsignallaufzeit t_{R1} und der zweiten Referenzsignallaufzeit t_{R2} zu bestimmen.

Die Signalverarbeitung in den Ausführungsbeispielen wurde unter Verwendung einer Digitalisierung der Messsignale beschrieben, es ist für den Fachmann naheliegend, dass auch eine teilweise oder rein analoge Verarbeitung der Messsignale möglich ist.

## Patentansprüche

1. Auswerteeinheit (12) für einen magnetostriktiven Wegsensor (10, 50, 80, 100) zur Bestimmung einer Position wenigstens eines Positionsgebers (24) mit
- einem Eingang (32) zum Empfangen eines vom magnetostriktiven Wegsensor (10,50, 80, 100) erzeugten elektrischen Messsignals (32, 56, 86, 106) wobei das elektrische Messsignal (32, 56, 86, 106) ein von einem eine Position eines relativ zu einer magnetostriktiven Gerätekomponente (20) beweglichen Positionsgebers (24) darstellendes Positionssignal (60) und ein eine Referenzposition darstellendes Referenzsignal (54, 58, 84) umfasst,
- einem ersten Auswertungszweig (38) zur Auswertung des Messsignals (32, 56, 86, 106), wobei der erste Auswertungszweig (38) dazu eingerichtet ist, eine Positionssignallaufzeit (tp) des Positionssignals (60) und eine erste Referenzsignallaufzeit (t_{R1}) des Referenzsignals (54, 58, 84) zu bestimmen, und
- einer Rechnereinheit (42), die dazu eingerichtet ist, aus der Positionssignallaufzeit (tp) die Position des Positionsgebers (24) zu bestimmen, **dadurch gekennzeichnet, dass**
- die Auswerteeinheit (12) einen zweiten Auswertungszweig (40) aufweist, der dazu eingerichtet ist, eine zweite Referenzsignallaufzeit (t_{R2}) des Referenzsignals (54, 58, 84) zu ermitteln, und
- dass die Rechnereinheit (42) dazu eingerichtet ist, eine Abweichung der ersten Referenzsignallaufzeit (t_{R1}) von der zweiten Referenzsignallaufzeit (t_{R2}) zu bestimmen.

2. Auswerteeinheit (12) nach Anspruch 1, wobei die Rechnereinheit (42) zur Ausgabe eines Fehlersignals aufgrund der Abweichung der ersten Referenzsignallaufzeit (t_{R1}) von der zweiten Referenzsignallaufzeit (t_{R2}) eingerichtet ist.

3. Auswerteeinheit (12) nach einem der vorhergehenden Ansprüche, wobei die Rechnereinheit (42) dazu eingerichtet ist, die Position des Positionsgebers (24) unter Berücksichtigung der ersten Referenzsignallaufzeit (t_{R1}) und/oder der zweiten Referenzsignallaufzeit (t_{R2}) zu bestimmen.

4. Auswerteeinheit (12) nach einem der vorhergehenden Ansprüche, wobei der erste Auswertungszweig (38) und/oder der zweite Auswertungszweig (40) dazu eingerichtet ist, die Signallaufzeiten (tp, t_{R1}, t_{R2}) unter Verwendung eines Triggersignals (44) eines Impulsgebers (16) des magnetostriktiven Wegsensors (10, 50, 80, 100) zu bestimmen, der zur Abgabe wenigstens eines Stromimpulses (14) an ein erstes Ende (18) der magnetostriktiven Gerätekomponente (20) eingerichtet ist.

5. Auswerteeinheit (12) nach einem der vorhergehenden Ansprüche, wobei die Auswerteeinheit (12) wenigstens eine Digitalisierungseinheit (36) zur Digitalisierung des Messsignals (32, 56, 86, 106) aufweist.

6. Auswerteeinheit nach Anspruch 5, wobei dem ersten Auswertungszweig (38) und zweiten Auswertungszweig (40) eine gemeinsame Digitalisierungseinheit (36) vorgeschaltet ist.

7. Auswerteeinheit (12) nach Anspruch 5, wobei dem ersten Auswertungszweig (38) eine erste Digitalisierungseinheit und dem zweiten Auswertungszweig (40) eine zweite Digitalisierungseinheit vorgeschaltet ist.

8. Auswerteeinheit (12) nach einem der vorhergehenden Ansprüche, wobei der zweite Auswertungszweig (40) zur Bestimmung einer Abweichung der zweiten Referenzsignallaufzeit (t_{R2}) von einer vorgegebenen Soll-Signallaufzeit und zur Ausgabe eines Fehlercodes aufgrund der Abweichung der zweiten Referenzsignallaufzeit (t_{R2}) von der Soll-Signallaufzeit eingerichtet ist.

9. Auswerteeinheit (12) nach einem der vorhergehenden Ansprüche, wobei der zweite Auswertungszweig (40) eine Schnittstelle aufweist, die dazu eingerichtet ist, die zweite Referenzsignallaufzeit (t_{R2}) und/oder den Fehlercode an einen externen Empfänger weiterzugeben.

10. Magnetostriktiver Wegsensor (10, 50, 80, 100) zur Bestimmung einer Position wenigstens eines Positionsgebers (24) mit
- einer magnetostriktiven Gerätekomponente (20), die sich entlang einer Messstrecke erstreckt und zum Leiten von durch Magnetostriktion ausgelösten, mechanischen Impulsen (28) ausgebildet ist,
- einem im Bereich eines ersten Endes (18) der magnetostriktive Gerätekomponente (20) angeordneten Messwandler (30) zur Detektion von in der magnetostriktiven Gerätekomponente (20) propagierenden mechanischen Impulsen (28) und zum Umwandeln der mechanischen Impulse (28) in ein elektrisches Messsignal (32, 56, 86, 106),
- einem Impulsgeber (16) zur Abgabe wenigstens eines Stromimpulses (14) an das erste Ende (18) der magnetostriktiven Gerätekomponente (20) zur Induktion eines ersten radialen Magnetfeldes (22) um die magnetostriktiven Gerätekomponente (20).
- wenigstens einem relativ zur magnetostriktiven Gerätekomponente (20) beweglichen ersten Positionsgeber (24) zum Auslösen eines ersten mechanischen Impulses (28) in der magnetostriktiven Gerätekomponente (20),
**dadurch gekennzeichnet, dass**
der magnetostriktive Wegsensor (10, 50, 80, 100) eine Auswerteeinheit (12) gemäß einem der vorhergehenden Ansprüche aufweist.

11. Magnetostriktiver Wegsensor (50) nach Anspruch 10, wobei das Referenzsignal (54) durch eine Reflexion des ersten mechanischen Impulses (28) an einem zweiten Ende (23) der magnetostriktiven Gerätekomponente (20) erzeugt ist.

12. Magnetostriktiver Wegsensor (10, 80) nach Anspruch 10, wobei das Referenzsignal (84) durch einen in einem vorgegebenen Abstand vom ersten Ende (18) der magnetostriktiven Gerätekomponente (20) angeordneten Referenzmagneten (82) ausgelösten zweiten mechanischen Impuls erzeugt ist.

13. Magnetostriktiver Wegsensor (100) nach Anspruch 10, wobei das Referenzsignal (58) im Messwandler (30) durch das vom Stromimpuls (14) induzierte Magnetfeld (22) erzeugt ist.

14. Verfahren zur Bestimmung einer Position von wenigstens einem Positionsgeber (24) eines magnetostriktiven Wegsensors (10, 50, 80, 100) mit einer Auswerteeinheit (12) umfassend die Schritte
- Empfangen eines vom magnetostriktiven Wegsensor (10, 50, 80, 100) erzeugten elektrischen Messsignals (32, 56, 86, 106) in der Auswerteeinheit (12), wobei das elektrische Messsignal (32, 56, 86, 106) ein von einem eine Position eines relativ zu einer magnetostriktiven Gerätekomponente (20) beweglichen Positionsgebers (24) darstellendes Positionssignal (60) und ein eine Referenzposition darstellendes Referenzsignal (54, 58, 84) umfasst,
- Bestimmen einer Positionssignallaufzeit (tp) des Positionssignals (60) und einer ersten Referenzsignallaufzeit (t_{R1}) des Referenzsignals (54, 58, 84) in einem ersten Auswertungszweig (38) der Auswerteeinheit (12),
- Bestimmen der Position des Positionsgebers (24) aus der Positionssignallaufzeit (tp),
- Bestimmen einer zweiten Referenzsignallaufzeit (t_{R2}) des Referenzsignals (54, 58, 84) in einem zweiten Auswertungszweig (40) der Auswerteeinheit (12), und
- Bestimmen einer Abweichung der ersten Referenzsignallaufzeit (t_{R1}) von der zweiten Referenzsignallaufzeit (t_{R2}).

## Claims

1. Evaluation unit (12) for a magnetostrictive displacement sensor (10, 50, 80, 100) for determining a position of at least one position sensor (24) having
- an input (32) for receiving an electrical measurement signal (32, 56, 86, 106) generated by the magnetostrictive displacement sensor (10, 50, 80, 100), 106), the electrical measurement signal (32, 56, 86, 106) comprising a position signal (60) representing a position of a position sensor (24) movable relative to a magnetostrictive device component (20) and a reference signal (54, 58, 84) representing a reference position,
- a first evaluation branch (38) for evaluating the measurement signal (32, 56, 86, 106), the first evaluation branch (38) being set up to determine a position signal transit time (tp) of the position signal (60) and a first reference signal transit time (t_{R1} ) of the reference signal (54, 58, 84), and
- a computer unit (42) which is set up to determine the position of the position transmitter (24) from the position signal propagation time (tp),
**characterized in that**
- the evaluation unit (12) has a second evaluation branch (40) which is set up to determine a second reference signal propagation time (t_{R2}) of the reference signal (54, 58, 84),
and
- the computer unit (42) is set up to determine a deviation of the first reference signal propagation time (t_{R1}) from the second reference signal propagation time (t_{R2}).

2. The evaluation unit (12) according to claim 1, wherein the computer unit (42) is arranged to output an error signal based on the deviation of the first reference signal propagation time (t_{R1}) from the second reference signal propagation time (t_{R2}).

3. Evaluation unit (12) according to any one of the preceding claims, wherein the computer unit (42) is set up to determine the position of the position transmitter (24) taking into account the first reference signal propagation time (t_{R1}) and/or the second reference signal propagation time (t_{R2}).

4. Evaluation unit (12) according to any one of the preceding claims, wherein the first evaluation branch (38) and/or the second evaluation branch (40) is set up to determine the signal propagation times (tp, t_{R1}, t_{R2}) using a trigger signal (44) of a pulse generator (16) of the magnetostrictive displacement sensor (10, 50, 80, 100), which is set up to output at least one current pulse (14) to a first end (18) of the magnetostrictive device component (20).

5. An evaluation unit (12) according to any one of the preceding claims, wherein the evaluation unit (12) comprises at least one digitizing unit (36) for digitizing the measurement signal (32, 56, 86, 106).

6. Evaluation unit according to claim 5, wherein a common digitizing unit (36) is connected upstream of the first evaluation branch (38) and the second evaluation branch (40).

7. Evaluation unit (12) according to claim 5, wherein a first digitizing unit is connected upstream of the first evaluation branch (38) and a second digitizing unit is connected upstream of the second evaluation branch (40).

8. An evaluation unit (12) according to any one of the preceding claims, wherein the second evaluation branch (40) is arranged to determine a deviation of the second reference signal propagation time (t_{R2}) from a predetermined desired signal propagation time and to output an error code based on the deviation of the second reference signal propagation time (t_{R2}) from the desired signal propagation time.

9. Evaluation unit (12) according to any one of the preceding claims, wherein the second evaluation branch (40) has an interface which is set up to forward the second reference signal propagation time (t_{R2}) and/or the error code to an external receiver.

10. Magnetostrictive displacement sensor (10, 50, 80, 100) for determining a position of at least one position transmitter (24), having
- a magnetostrictive device component (20) which extends along a measuring path and is designed to conduct mechanical pulses (28) triggered by magnetostriction,
- a measuring transducer (30) arranged in the region of a first end (18) of the magnetostrictive device component (20) for detecting mechanical pulses (28) propagating in the magnetostrictive device component (20) and for converting the mechanical pulses (28) into an electrical measuring signal (32, 56, 86, 106),
- a pulse generator (16) for delivering at least one current pulse (14) to the first end (18) of the magnetostrictive device component (20) for inducing a first radial magnetic field (22) around the magnetostrictive device component (20).
- at least one first position sensor (24) movable relative to the magnetostrictive device component (20) for inducing a first mechanical pulse (28) in the magnetostrictive device component (20),
**characterized in that**
the magnetostrictive displacement sensor (10, 50, 80, 100) comprises an evaluation unit (12) according to one of the preceding claims.

11. The magnetostrictive displacement sensor (50) of claim 10, wherein the reference signal (54) is generated by a reflection of the first mechanical pulse (28) at a second end (23) of the magnetostrictive device component (20).

12. The magnetostrictive displacement sensor (10, 80) of claim 10, wherein the reference signal (84) is generated by a second mechanical pulse triggered by a reference magnet (82) disposed at a predetermined distance from the first end (18) of the magnetostrictive device component (20).

13. The magnetostrictive displacement sensor (100) of claim 10, wherein the reference signal (58) in the transducer (30) is generated by the magnetic field (22) induced by the current pulse (14).

14. Method for determining a position of at least one position sensor (24) of a magnetostrictive displacement sensor (10, 50, 80, 100) with an evaluation unit (12) comprising the steps of
- receiving an electrical measurement signal (32, 56, 86, 106) generated by the magnetostrictive displacement sensor (10, 50, 80, 100) in the evaluation unit (12), the electrical measurement signal (32, 56, 86, 106) comprising a position signal (60) representing a position of a position sensor (24) movable relative to a magnetostrictive device component (20) and a reference signal (54, 58, 84) representing a reference position,
- determining a position signal transit time (tp) of the position signal (60) and a first reference signal transit time (t_{R1}) of the reference signal (54, 58, 84) in a first evaluation branch (38) of the evaluation unit (12),
- determining the position of the position sensor (24) from the position signal propagation time (tp),
- determining a second reference signal propagation time (t_{R2}) of the reference signal (54, 58, 84) in a second evaluation branch (40) of the evaluation unit (12), and
- determining a deviation of the first reference signal propagation time (t_{R1}) from the second reference signal propagation time (t_{R2}).

## Revendications

1. Unité d'évaluation (12) pour un capteur de déplacement magnétostrictif (10, 50, 80, 100) pour déterminer une position d'au moins un capteur de position (24) avec
- une entrée (32) pour recevoir un signal de mesure électrique (32, 56, 86, 106) généré par le capteur de déplacement magnétostrictif (10, 50, 80, 100), le signal de mesure électrique (32, 56, 86, 106) comprenant un signal de position (60) représentant une position d'un capteur de position (24) mobile par rapport à un composant d'appareil magnétostrictif (20) et un signal de référence (54, 58, 84) représentant une position de référence,
- une première branche d'évaluation (38) pour évaluer le signal de mesure (32, 56, 86, 106), la première branche d'évaluation (38) étant conçue pour déterminer un temps de propagation du signal de position (tp) du signal de position (60) et un premier temps de propagation du signal de référence (t_{R1}) du signal de référence (54, 58, 84), et
- une unité de calcul (42) qui est conçue pour déterminer la position du capteur de position (24) à partir du temps de propagation du signal de position (tp), **caractérisée en ce que**
- l'unité d'évaluation (12) présente une deuxième branche d'évaluation (40) qui est conçue pour déterminer un deuxième temps de propagation du signal de référence (t_{R2}) du signal de référence (54, 58, 84), et
- l'unité de calcul (42) est conçue pour déterminer un écart entre le premier temps de propagation du signal de référence (t_{R1} ) et le deuxième temps de propagation du signal de référence (t_{R2} ).

2. Unité d'évaluation (12) selon la revendication 1, dans laquelle l'unité de calcul (42) est conçue pour émettre un signal d'erreur en raison de l'écart entre le premier temps de propagation du signal de référence (t_{R1}) et le deuxième temps de propagation du signal de référence (t_{R2}).

3. Unité d'évaluation (12) selon l'une des revendications précédentes, dans laquelle l'unité de calcul (42) est conçue pour déterminer la position du capteur de position (24) en tenant compte du premier temps de propagation du signal de référence (t_{R1}) et/ou du deuxième temps de propagation du signal de référence (t_{R2}).

4. Unité d'évaluation (12) selon l'une des revendications précédentes, dans laquelle la première branche d'évaluation (38) et/ou la deuxième branche d'évaluation (40) est conçue pour déterminer les temps de propagation des signaux (tp, t_{R1}, t_{R2}) en utilisant un signal de déclenchement (44) d'un générateur d'impulsions (16) du capteur de déplacement magnétostrictif (10, 50, 80, 100), qui est conçu pour délivrer au moins une impulsion de courant (14) à une première extrémité (18) du composant d'appareil magnétostrictif (20).

5. Unité d'évaluation (12) selon l'une des revendications précédentes, dans laquelle l'unité d'évaluation (12) présente au moins une unité de numérisation (36) pour la numérisation du signal de mesure (32, 56, 86, 106).

6. Unité d'évaluation selon la revendication 5, dans laquelle une unité de numérisation (36) commune est montée en amont de la première branche d'évaluation (38) et de la deuxième branche d'évaluation (40).

7. Unité d'évaluation (12) selon la revendication 5, dans laquelle une première unité de numérisation est montée en amont de la première branche d'évaluation (38) et une deuxième unité de numérisation est montée en amont de la deuxième branche d'évaluation (40).

8. Unité d'évaluation (12) selon l'une des revendications précédentes, dans laquelle la deuxième branche d'évaluation (40) est conçue pour déterminer un écart du deuxième temps de propagation du signal de référence (t_{R2}) par rapport à un temps de propagation du signal de consigne prédéfini et pour émettre un code d'erreur en raison de l'écart du deuxième temps de propagation du signal de référence (t_{R2}) par rapport au temps de propagation du signal de consigne.

9. Unité d'évaluation (12) selon l'une des revendications précédentes, dans laquelle la deuxième branche d'évaluation (40) comporte une interface qui est conçue pour transmettre le deuxième temps de propagation du signal de référence (t_{R2}) et/ou le code d'erreur à un récepteur externe.

10. Capteur de déplacement magnétostrictif (10, 50, 80, 100) pour déterminer une position d'au moins un capteur de position (24) avec
- un composant d'appareil magnétostrictif (20) qui s'étend le long d'un trajet de mesure et qui est conçu pour conduire des impulsions mécaniques (28) déclenchées par magnétostriction,
- un convertisseur de mesure (30) disposé dans la zone d'une première extrémité (18) du composant d'appareil magnétostrictif (20) pour détecter des impulsions mécaniques (28) se propageant dans le composant d'appareil magnétostrictif (20) et pour convertir les impulsions mécaniques (28) en un signal de mesure électrique (32, 56, 86, 106),
- un générateur d'impulsions (16) pour délivrer au moins une impulsion de courant (14) à la première extrémité (18) du composant d'appareil magnétostrictif (20) pour induire un premier champ magnétique radial (22) autour du composant d'appareil magnétostrictif (20),
- au moins un premier capteur de position (24) mobile par rapport au composant d'appareil magnétostrictif (20) pour déclencher une première impulsion mécanique (28) dans le composant d'appareil magnétostrictif (20), **caractérisé en ce que**
le capteur de déplacement magnétostrictif (10, 50, 80, 100) présente une unité d'évaluation (12) selon l'une des revendications précédentes.

11. Capteur de déplacement magnétostrictif (50) selon la revendication 10, dans lequel le signal de référence (54) est généré par une réflexion de la première impulsion mécanique (28) sur une deuxième extrémité (23) du composant d'appareil magnétostrictif (20).

12. Capteur de déplacement magnétostrictif (10, 80) selon la revendication 10, dans lequel le signal de référence (84) est généré par une deuxième impulsion mécanique déclenchée à une distance prédéterminée de la première extrémité (18) du composant d'appareil magnétostrictif (20).

13. Capteur de déplacement magnétostrictif (100) selon la revendication 10, dans lequel le signal de référence (58) est généré dans le transformateur de mesure (30) par le champ magnétique (22) induit par l'impulsion de courant (14).

14. Procédé pour déterminer une position d'au moins un capteur de position (24) d'un capteur de déplacement magnétostrictif (10, 50, 80, 100) avec une unité d'évaluation (12) comprenant les étapes suivantes
- réception d'un signal de mesure électrique (32, 56, 86, 106) généré par le capteur de déplacement magnétostrictif (10, 50, 80, 100) dans l'unité d'évaluation (12), le signal de mesure électrique (32, 56, 86, 106) comprenant un signal de position (60) représentant une position d'un capteur de position (24) mobile par rapport à un composant d'appareil magnétostrictif (20) et un signal de référence (54, 58, 84),
- déterminer un temps de propagation de signal de position (tp) du signal de position (60) et un premier temps de propagation de signal de référence (t_{R1}) du signal de référence (54, 58, 84) dans une première branche d'évaluation (38) de l'unité d'évaluation (12),
- déterminer la position du capteur de position (24) à partir du temps de propagation du signal de position (tp),
- déterminer un deuxième temps de propagation du signal de référence (t_{R2}) du signal de référence (54, 58, 84) dans une deuxième branche d'évaluation (40) de l'unité d'évaluation (12), et
- déterminer un écart entre le premier temps de propagation du signal de référence (t_{R1}) et le deuxième temps de propagation du signal de référence (t_{R2}) .
